(19) Europäisches Patentamt / European Patent Office / Office européen des brevets

(11) **EP 2 015 916 B1**

(12) **EUROPÄISCHE PATENTSCHRIFT**

(45) Veröffentlichungstag und Bekanntmachung des Hinweises auf die Patenterteilung:
**19.12.2012   Patentblatt 2012/51**

(21) Anmeldenummer: 07728750.6

(22) Anmeldetag: **03.05.2007**

(51) Int Cl.:
**B29C 45/27** (2006.01)    **B29C 45/73** (2006.01)

(86) Internationale Anmeldenummer:
**PCT/EP2007/054297**

(87) Internationale Veröffentlichungsnummer:
**WO 2007/128769 (15.11.2007 Gazette 2007/46)**

(54) **ZWEITEILIGER BODENEINSATZ**

TWO-PIECE BOTTOM INSERT

INSTALLATION AU SOL EN DEUX PARTIES

(84) Benannte Vertragsstaaten:
**AT CH DE IT LI LU**

(30) Priorität: **06.05.2006   DE 102006021228**

(43) Veröffentlichungstag der Anmeldung:
**21.01.2009   Patentblatt 2009/04**

(73) Patentinhaber: **MHT Mold & Hotrunner Technology AG**
**65239 Hochheim (DE)**

(72) Erfinder:
• **NETER, Witold**
**Newnan, Georgia 30265 (US)**

• **THÖMMES, Helmut**
**54441 Kastel (DE)**
• **SCHWEININGER, Stefan**
**65197 Wiesbaden (DE)**

(74) Vertreter: **Köppen, Manfred et al**
**WSL Patentanwälte**
**Kaiser-Friedrich-Ring 98**
**65185 Wiesbaden (DE)**

(56) Entgegenhaltungen:
**DE-A1- 10 024 625     JP-A- 2006 289 393**
**US-A- 4 622 001       US-A1- 2004 247 736**
**US-B1- 6 220 850**

**Beschreibung**

Die vorliegende Erfindung betrifft einen Bodeneinsatz für einen Formnest bestehend aus einer Kavität, einem Kern, einem Halsring, einem Stützring und dem Bodeneinsatz für die Herstellung von Formlingen aus Kunststoff bestehend aus einem Grundkörper mit einer heißen Seite, die eine Vertiefung zur Aufnahme von geschmolzenem, unter Druck stehendem Kunststoff aufweist, und einer kalten Seite mit einer Vertiefung, deren Innenkontur dafür vorgesehen ist, mit dem herzustellenden Formling in Kontakt zu treten und dessen Außenkontur zu formen, sowie einer Pforte, welche die Vertiefung der heißen Seite mit der Vertiefung der kalten Seite verbindet und dafür vorgesehen ist, geschmolzenen Kunststoff von der heißen Seite in die kalte Seite einzubringen.

Ein Formnest mit solch einem Bodeneinsatz ist beispielsweise aus der DE 100 24 625 bekannt und in Figur 1 gezeigt.

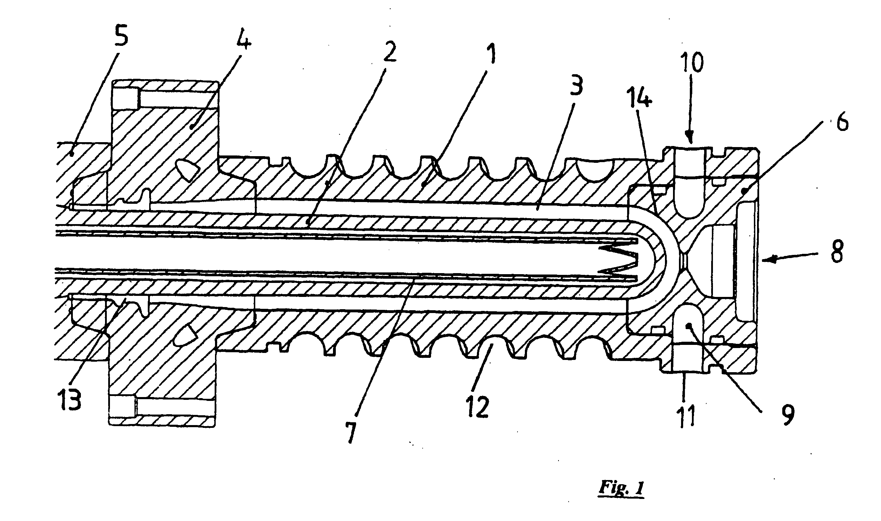

Das Formnest kommt im wesentlichen im Spritzgießverfahren zum Einsatz. Beim Spritzgießen wir die pulverförmige oder granulierte Formmasse, z. B. in einer Schneckenspritzgießmaschine, plastifiziert und dann beispielsweise durch axiale Verschiebung der Schnecke durch den Spritzkanal in das geschlossene, im allgemeinen gekühlte Werkzeug, z. B. ein Formnest, wie es in Figur 1 gezeigt ist, gedrückt.

Hat sich die Form bzw. der darin vorgesehene Formraum mit der Schmelze gefüllt, so erstarrt diese durch Abkühlung. Schließlich wird das Werkzeug bzw. das Formnest geöffnet und das fertige Formteil entformt und ausgestoßen. Das Werkzeug kann wieder geschlossen werden und ein neuer Arbeitszyklus kann mit dem erneuten Spritzgießen beginnen.

Mit Hilfe des Spritzgusses ist es überdies möglich, Hohlkörper herzustellen, die in einem späteren Arbeitsschritt z. B. zu Flaschen oder Kanistern aufgeblasen werden. Diese Hohlkörper werden auch als Vorformlinge bzw. Preforms bezeichnet. Das in Figur 1 gezeigte, aus dem Stand der Technik bekannte Formnest ist für die Herstellung von solchen Preforms vorgesehen. Das Formnest besteht hier aus der Kavität 1, dem Kern 2, dem Halsring 4, dem Stützring 5 sowie dem Bodeneinsatz 6. Im zusammengesetzten Zustand, der in Figur 1 gezeigt ist, wird der Formraum von diesen Teilen umgeben bzw. gebildet. Die mehrteilige Ausführung des Formnests die u.a. der leichten Entformbarkeit des fertigen Werkstücks sowie der einfachen Herstellung des Formnests selbst. Die Kunststofformmasse wird in einer geeigneten Plastifiziervorrichtung (nicht gezeigt) plastifiziert und homogenisiert und durch die Öffnung 8 in den Formraum 3 gegeben. Nach der Abkühlung der Formmasse kann das Formteil entformt werden und in einem weiteren Arbeitsschritt am Gewinde 13 bzw. an dem Transportring unterhalb des Gewindes gehalten und zu einer Flasche oder einem Kanister aufgeblasen werden.

Um eine möglichst schnelle Abkühlung der Formmasse zu erreichen und dadurch die Zykluszeit zu verringern, wird das Formnest im allgemeinen gekühlt. Dazu sind beispielsweise an der Kavität 1 außen umlaufende Kühlnuten 12 angebracht. Im Betrieb wird die Kavität daher koaxial von einem weiteren Werkzeugteil oder von mehreren Werkzeugteilen umfaßt, so daß die Kühlnuten 12 mit dem umfassenden Werkzeugteil Kühlkanäle bilden. Innerhalb des Kerns 2 ist ein Zuführkanal 7 angeordnet, durch den Kühlwasser in den Kern geleitet werden kann, das innerhalb des Kanals in der Figur 1 von links nach rechts strömt und dann zwischen der Wand des Kanals 7 und der Innenwand des Kerns 2 von rechts nach links zurückgeleitet wird. Wie in der Abbildung zu erkennen, verjüngt sich der Formraum 3 in der Nähe des Bodeneinsatzes 6. Die sich verjüngende Kontur des Formraums, die von dem Bodeneinsatz 6 gebildet wird, trägt in Figur 1 die Bezugszahl 14.

Um hier eine effektive Kühlung zu erreichen, weist der Bodeneinsatz 6 eine umlaufende Kühlnut 9 auf. Die Kavität 1 weist eine Einfüllöffnung 10 und eine Ablaßöffnung 11 für die Wasserkühlung des Bodeneinsatzes 6 auf.

Meist erfolgt die Zuführung der Kunststoffschmelze über eine mit einem Nadelventil betätigte Düse, die sich durch die Öffnung 8 des Bodeneinsatzes in die Vertiefung der heißen Seite hineinerstreckt und deren Auslaß unmittelbar vor der Öffnung bzw. Pforte des Bodeneinsatzes endet. Der Bodeneinsatz stellt die Schnittstelle zwischen der sogenannten heißen Seite des gesamten Werkzeuges und der sogenannten kalten Seite des gesamten Werkzeuges dar, so daß der Bodeneinsatz selbst eine heiße Seite, die in Figur 1 rechts gezeigt ist und eine kalte Seite, die in Figur 1 links gezeigt ist, aufweist. In der heißen Seite des Werkzeuges sowie des Bodeneinsatzes wird die Kunststoffschmelze unter hohem Druck bereitgestellt. Hier ist es wesentlich, daß die Schmelze einschließlich des Nadelventils eine Arbeitstemperatur von etwa 280 bis 285 °C aufweist. Wird das Nadelventil geöffnet, so wird die Kunststoffschmelze durch die Düse in den Formraum 3 eingebracht. Der Formraum 3 bzw. alle daran angrenzenden Flächen, d.h. auch die Innenwand 14 des Bodeneinsatzes muß so gut wie möglich gekühlt werden, so daß die Schmelze sehr schnell erstarren und der Vorformling entnommen werden kann. Der Bodeneinsatz 6 muß daher einerseits extrem gut gekühlt werden und darf aber andererseits an seiner heißen Seite die Funktion des Nadelventils nicht beeinträchtigen, d.h, das Nadelventil muß auf der Arbeitstemperatur bleiben. Dies hat zur Folge, daß die Düsenspitze einen zusätzliche Heizer benötigt, so daß innerhalb des Bodeneinsatzes 6 häufig sowohl ein Heizer als auch Kühlkanäle angeordnet sind, die In der Regel gleichzeitig verwendet werden. Dadurch ist ein schnelles Abkühlen des Vorformlings im Formnest nur begrenzt möglich.

Dokument DE 100 37 739 schlägt vor, zwischen der Düse und dem Bodeneinsatz ein Wärmedämmelement aus wärmeisolierendem Kunststoff anzuordnen.

Dies kann zwar den Wärmefluß zwischen Düsenspitze einerseits und kalter Seite andererseits verringern, ändert jedoch wenig daran, dass sich innerhalb des Bodeneinsatzes ein erheblicher Temperaturgradient ausbildet und daher von der heißen zur kalten Seite eine große Wärmemenge abfließt, die durch eine zusätzliche Kühlleistung abgeführt werden muß.

Häufig besteht die Notwendigkeit, die Form und/oder das Gewicht des herzustellenden Formlings zu verändern. Dann müssen alle Teile, die mit dem herzustellenden Formling in Kontakt treten, d.h. deren Innenkontur der Außenkontur des herzustellenden Vorformling entspricht ausgetauscht werden. Dies bedeutet im allgemeinen, daß auch der Bodeneinsatz ausgetauscht werden muß, da die an der kalten Seite angeordnete Vertiefung einen Abschnitt der Außenkontur des Vorformlings bestimmt.

Die US 4,622,001 beschreibt ein Kühlsystem für eine Kavität.

Ausgehend von diesem Stand der Technik ist es daher die Aufgabe der vorliegenden Erfindung, einen Bodeneinsatz zur Verfügung zu stellen, der leicht an verschiedene Abmessungen des Vorformlings angepaßt werden kann und möglichst ein schnelleres Abkühlen des Vorformlings im Formraum ermöglicht.

Erfindungsgemäß wird diese Aufgabe durch einen Bodeneinsatz gemäß Anspruch 1 gelöst. Durch die erfindungsgemäße Maßnahme muß bei einer Anpassung des Vorformlings nun nicht mehr der komplette Bodeneinsatz ausgetauscht werden, sondern lediglich das kalte Teil. Auch wenn es im laufenden Betrieb zu einer Beschädigung der formgebenden Fläche des Bodeneinsatz kommen sollte, muß nur das kalte Teil ersetzt werden. Das heiße Teil kann unabhängig von den Abmessungen des Vorformlings weiter verwendet werden.

Durch die Verwendung von zwei getrennten Teilen kommt es darüber hinaus in der Regel automatisch zu einem verringerten Wärmefluß zwischen dem heißen und dem kalten Teil.

Darüber hinaus hat die zweiteilige Lösung den Vorteil, daß die beiden Teile zu Zwecken der Wartung bzw. Reinigung auseinandergenommen werden können.

Dadurch, dass das heiße Teil derart ausgebildet, daß es eine der Vertiefung der heißen Seite gegenüberliegenden Ausnehmung zur Aufnahme des kalten Teils aufweist, wird das kalte Teil des Bodeneinsatzes somit in die entsprechende Vertiefung des heißen Teils eingesetzt. Die Abdichtung des kalten Teils gegenüber dem heißen Teil kann vorzugsweise mit Hilfe von O-Ringen erfolgen.

Es ist besonders bevorzugt, wenn alle Flächen, die für den Kontakt mit dem herzustellenden Formling vorgesehen sind, an dem kalten Teil angeordnet sind. Es ist daher möglich, das kalte Teil bei einer relativ niedrigen Temperatur zu halten, während das heiße Teil bei einer sehr hohen Temperatur, beispielsweise bei etwa 280 °C, gehalten wird, ohne daß der Wärmeverlust sehr groß wird.

Weiterhin kann es von Vorteil sein, daß an der Kontaktfläche zwischen heißem und kaltern Teil eine auf mindestens einem Teil aufgebrachte Isolationsbeschichtung, eine Isolationsmembran und/oder ein Abstandselement vorgesehen ist. Durch diese Maßnahme kann die Wärmeübertragung zwischen kaltern und heißem Teil weiter reduziert werden.

Der Bodeneinsatz weist einen Kühlkanal zur Zu- und Abführung eines Kühlfluids zu und von der kalten Seite auf.

Kaltes und heißes Teil des Bodeneinsatzes sind derart ausgebildet, daß beim Einsetzen des kalten Teils in die Ausnehmung des heißen Teils zumindest abschnittsweise zwischen kaltem Teil und heißem Teil ein Kühlraum zur Aufnahme von Kühlfluid verbleibt wobei der Kühlraum im wesentlichen ringförmig ausgebildet ist. Dadurch ist gewährleistet, daß das Kühlwasser das kalte Teil umströmt und damit sehr effektiv kühlt.

Darüber hinaus ist mit Vorteil der ringförmige Raum derart ausgebildet, daß die den ringförmigen Raum begrenzende Fläche an dem kalten Teil im wesentlichen parallel zur mit dem Formling in Kontakt tretenden Innenfläche der Vertiefung des kalten Teils verläuft. Dadurch ist eine sehr effiziente Kühlung des kalten Teils mit Kühlfluid möglich, da der ringförmige Raum der Kontur der zu kühlenden Innenfläche der Vertiefung der kalten Seite folgt.

Die Wandstärke des kalten Teils im Bereich des ringförmigen Raums kann weiter reduziert werden, wenn das kalte Teil im Bereich des ringförmigen Raums Verstärkungselemente, z.B. Verstärkungsrippen, aufweist. Prinzipiell ist es wünschenswert den ringförmigen Raum möglichst nahe an die Innenfläche des kalten Teils zu bringen, die mit dem zu kühlenden Vorformling in Kontakt tritt, da dadurch der Vorformling sehr schnell abgekühlt werden kann. Allerdings kann die Wandstärke nicht zu gering gewählt werden, da dann die Stabilität des kalten Teils gefährdet wird. Mit Hilfe der Verstärkungsrippen kann die Stabilität des kalten Teils bei noch geringerer Wahl der Wandstärke gewährleistet werden.

In einer weiteren besonders bevorzugten Ausführungsform ist eine Einrichtung zur Wärmedämmung innerhalb des Bodeneinsatzes zwischen der heißen Seite und der kalten Seite des Bodeneinsatzes vorgesehen.

Die Einrichtung zur Wärmedämmung kann beispielsweise aus einem in dem Grundkörper eingebrachten Einschnitt bestehen, wobei der Einschnitt derart ausgebildet ist, daß durch das Einbringen des Einschnitts die Wärmedurchtrittsfläche, d.h. die Fläche senkrecht zum Wärmefluß im Bereich des Einschnittes reduziert wird und zwar vorzugsweise um mindestens 30 % und besonders bevorzugt um mindestens 50 % und ganz besonders bevorzugt um mindestens 75 %. Der Hauptwärmefluß von der heißen zu der kalten Seite erfolgt über den Grundkörper des Bodeneinsatzes, der im allgemeinen aus einem metallischen Werkstoff gefertigt ist. Durch den erfindungsgemäßen Einschnitt wird an der Stelle des Einschnittes die Wärmedurchtrittsfläche verringert, so daß dadurch auch die Größe des Wärmeflusses erheblich reduziert wird.

Dieser Maßnahme liegt die Überlegung zugrunde, daß der Hauptteil der Wärmeübertragung von der heißen zur kalten Seite des Bodeneinsatzes mittels Wärmeleitung erfolgt. Die Wärmemenge, die durch Wärmeleitung übertragen wird, berechnet sich nach dem Fourierschen Gesetz zu:

$$\dot{Q} = \frac{\lambda \cdot A \cdot \Delta T}{L}$$

wobei $\dot{Q}$ die transportierte Wärmemenge pro Zeiteinheit ist, A die Fläche senkrecht zum Wärmefluß, L die Dicke des Körpers, durch den Wärme fließt, $\lambda$ die Wärmeleitfähigkeit des Materials und $\Delta T$ die Temperaturdifferenz zwischen der kalten und der heißen Seite ist.

Der Einschnitt führt daher zu einer Reduzierung der Fläche A und damit zu einer Reduktion des Wärmetransports

Mit Vorteil ist der Einschnitt in etwa in dem die Pforte umgebenden Bereich eingebracht. Es hat sich gezeigt, daß in einem besonders bevorzugten Ausschnitt der Einschnitt am besten derart angeordnet wird, daß er die Vertiefung der heißen Seite an einem Abschnitt in der Nähe der Pforte umgibt. Mit anderen Worten ist der Einschnitt nicht direkt an der Pforte angeordnet, sondern ein wenig in Richtung der Vertiefung der heißen Seite verschoben. Der Grund hierfür ist, daß die formgebende Kontur des Bodeneinsatzes sich im allgemeinen bis zur Pforte erstreckt und es für eine effiziente und schnelle Abkühlung des Vorformlings notwendig ist, alle formgebenden Oberflächen möglichst effektiv zu kühlen. Der Einschnitt besteht in einer bevorzugten Ausführungsform aus einer im wesentlichen umlaufenden Nut im Grundkörper, wobei die Nut eine Tiefe hat, die vorzugsweise mindestens zweimal und besonders bevorzugt mindestens dreimal so groß ist, wie die Breite der Nut. Grundsätzlich sollte die Nut möglichst tief ausgeführt werden, da es am wirkungsvollsten ist, wenn die Wärmedurchtrittsfläche möglichst reduziert wird.

Der Einschnitt kann zumindest teilweise mit einem wärmedämmenden Material ausgefüllt sein. Grundsätzlich reicht es jedoch völlig aus, den Einschnitt einfach mit Luft zu füllen. Selbstverständlich darf er nicht mit Kühlwasser beaufschlagt werden, da dann der Einschnitt seine wärmedämmende Funktion verlieren würde.

Weitere Vorteile, Merkmale und Anwendungsmöglichkeiten der vorliegenden Erfindung werden deutlich anhand der folgenden Beschreibung einer bevorzugten Ausführungsform und der zugehörigen Figuren. Es zeigen:

Figur 1      ein Formnest des Standes der Technik,

Figur 2      eine erfindungsgemäße Ausführungsform des Bodeneinsatzes, wobei die beiden Teile des Bodeneinsatzes getrennt dargestellt sind, und

Figur 3      die zweiteilige Ausführungsform des Bodeneinsatzes von Figur 2, wobei der Bodeneinsatz im zusammengesetzten Zustand dargestellt ist.

Figur 1 zeigt das bereits ausführlich erläuterte Formnest des Standes der Technik.

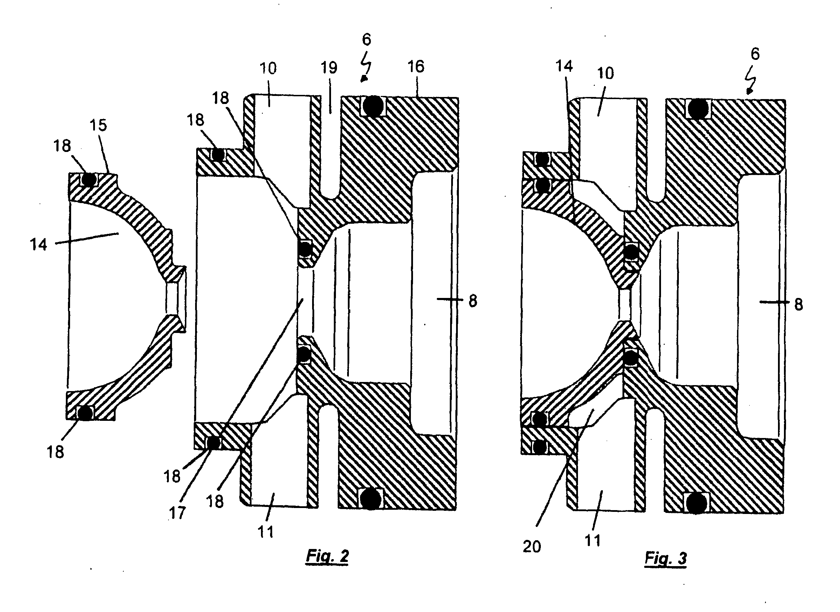

In Figur 2 ist eine erfindungsgemäße Ausführungsform des Bodeneinsatzes 6 gezeigt. Der Bodeneinsatz 6 besteht aus zwei Teilen, nämlich dem kalten Teil 15 und dem heißen Teil 16.

Der Bodeneinsatz 6 weist an seiner heißen Seite eine Öffnung bzw. Vertiefung 8 auf, die der Zuführung der Kunststoffschmelze dient. In dieser Ausnehmung wird die entsprechende Düse, die mittels eines Nadelventils geöffnet oder verschlossen werden kann, eingesetzt. Die Düsenspitze muß eine Arbeitstemperatur haben, die oberhalb der Schmelztemperatur der Kunststoffschmelze liegt.

Das kalte Teil 15 weist ebenfalls eine Ausnehmung auf, dessen Innenwände im Betrieb mit der Außenwand des herzustellenden Vorformlings in Kontakt treten. Das kalte Teil 15 muß gekühlt werden, um für ein schnelles Erstarren der in den Formraum eingebrachten Schmelze zu sorgen. Folglich ist der Temperaturgradient von der in den Figuren 2 und 3 rechts dargestellten heißen Seite zu der in den Figuren 2 und 3 links dargestellten kalten Seite extrem hoch.

Da der Grundkörper des Bodeneinsatzes 6 aus einem metallischen Werkstoff hergestellt ist, ist der Wärmefluß innerhalb des Bodeneinsatzes erheblich. Zwischen der heißen Seite und der kalten Seite sind daher Mittel zur Wärmedämmung vorgesehen sind.

So ist beispielsweise, wie in den Figuren 2 und 3 deutlich zu erkennen ist, in den Grundkörper des Bodeneinsatzes 6 eine ringförmige Nut 19 eingebracht worden. Diese ringförmige Nut 19 sorgt dafür, daß der effektive Materialquerschnitt, d.h. die Wärmedurchtrittsfläche, von der heißen Seite (in den Figuren 2 und 3 rechts gezeigt) zu der kalten Seite (in den Figuren 2 und 3 links gezeigt) deutlich reduziert wird.

Da das Material des Grundkörpers des Bodeneinsatzes 6 metallisch ist, findet der wesentliche Wärmeübertrag durch die metallische Wärmeleitung innerhalb des Grundkörpers statt. Die einfachste Methode, um den Wärmefluß von der heißen in Richtung der kalten Seite zu reduzieren ist daher, den Materialquerschnitt bzw. die effektive Fläche, über die der Wärmeübertrag stattfinden kann, zu reduzieren. Es kommt daher weniger auf die Breite der Nut 19 an, sondern primär auf die Tiefe der Nut. Je geringer der verbleibende Materialquerschnitt bzw. die verbleibende Materialquerschnittsfläche ist, um so geringer ist die Wärmeübertragung zwischen heißer Seite einerseits und kalter Seite andererseits. Natürlich ist bei der Wahl des Einschnitts 19 zu berücksichtigen, daß der Bodeneinsatz eine Stabilität beibehalten muß, daher kann die Nut 19 nicht beliebig tief gewählt werden.

Der durch das Einbringen der ringförmigen Nut 19 verbleibende Spalt kann entweder einfach mit Luft gefüllt bleiben, da im allgemeinen der Wärmeübertrag durch die in dem Spalt verbleibenden Luftmoleküle gegenüber dem Wärmeübertrag über die metallische Wärmeleitung vernachlässigbar ist, oder er kann mit einem wärmedämmenden Material ausgefüllt werden. Es versteht sich, daß die ringförmige Nut 19 nicht mit Kühlwasser beaufschlagt werden darf, da sonst lediglich die Trennfläche zwischen der heißen und der kalten Seite verschoben werden würde, jedoch der Wärmeübertrag nicht reduziert werden würde.

Weiterhin ist in den Figuren 2 und 3 zu sehen, daß der Bodeneinsatz 6 aus zwei getrennten Teilen 15 und 16 besteht. Auch dies führt zu einer Reduzierung des Wärmeübertrags zwischen heißer Seite und kalter Seite. Die Abdichtung des kalten Teils 15 gegenüber dem heißen Teil 16 erfolgt mittels O-Ringen 18. Zu Reinigungs- bzw. Wartungszwecken kann zudem das kalte Teil 15 aus dem heißen Teil 16 entnommen werden. Darüber hinaus ist es, für den Fall, daß die Außenkontur des herzustellenden Vorformlings verändert werden soll, lediglich notwendig, das kalte Teil 15 neu zu gestalten. Das heiße Teil 16 des Bodeneinsatzes kann unverändert bestehen bleiben. Dies reduziert zudem die Umrüstkosten im Falle eines Wechsels des Preform-Designs.

Wie insbesondere in Figur 3, die den zusammengesetzten Bodeneinsatz zeigt, zu sehen ist, bildet sich beim Einsetzen des kalten Teils 15 in das heiße Teil 16 zwischen der Außenfläche des kalten Teils 15 und der Innenfläche der Vertiefung des heißen Teils 16 ein ringförmiger Raum 20. Wird nun Kühlfluid, z. B. Kühlwasser über den Zulauf 10 in den Bodeneinsatz eingeführt, so umströmt das Kühlwasser das kalte Teil 15 und verläßt über den Auslaß 11 den Bodeneinsatz wieder. Durch diese Gestaltung kann die mit dem Vorformling in Kontakt tretende Innenkontur der Vertiefung der kalten Seite effektiv gekühlt werden.

Durch die Anordnung der Wärmeisolation zwischen Kühlkanal einerseits und der heißen Seite des Bodeneinsatzes andererseits wird der Wärmeübertrag von der heißen Seite zu der kalten Seite deutlich reduziert, so daß weniger Wärme über die Kühlkanäle abgeführt werden muß und sich somit eine deutlich verbesserte Kühlwirkung einstellt.

## Bezugszeichenliste

1  Kavität
2  Kern
3  Formraum
4  Halsring
5  Stützring
6  Bodeneinsatz
7  Zuführkanal
8  Vertiefung
9  Kühlnut
10  Zulauf
11  Auslaß
12  umlaufende Kühlnuten
13  Gewinde
14  Kontur des Formraums
15  kaltes Teil
16  heißes Teil
17  Pforte
18  O-Ringe
19  Einschnitt
20  Kühlraum

## Patentansprüche

1. Bodeneinsatz (6) für ein Formnest für die Herstellung von Formlingen aus Kunststoff bestehend aus einem Grundkörper mit einer heißen Seite, die eine Vertiefung zur Aufnahme von geschmolzenem, unter Druck stehendem Kunststoff aufweist, und einer kalten Seite mit einer Vertiefung, deren Innenkontur dafür vorgesehen ist, mit dem herzustellenden Formling in Kontakt zu treten und dessen Außenkontur zu formen, sowie einer Pforte, welche die Vertiefung der heißen Seite mit der Vertiefung der kalten Seite verbindet und dafür vorgesehen ist, geschmolzenen Kunststoff von der heißen Seite in die kalte Seite einzubringen, wobei der Bodeneinsatz zweiteilig ausgebildet ist, und zwar mit einem heißen Teil (16) das die Vertiefung der heißen Seite aufweist, und einem kalten Teil (15), das die Vertiefung der kalten Seite aufweist, wobei das kalte Teil (15) zumindest teilweise innerhalb des heißen Teils (16) angeordnet ist, so daß das heiße Teil (16) das kalte Teil (15) zumindest abschnittsweise umgibt, wobei das heiße Teil (16) eine der Vertiefung der heißen Seite gegenüberliegende Ausnehmung zur Aufnahme des kalten Teils (15) aufweist, **dadurch gekennzeichnet, dass** zumindest ein Kühlkanal (10,11) zur Zu- und/oder Abführung eines Kühlfluids zu und von der kalten Seite vorgesehen ist, **dadurch gekennzeichnet, daß** der zumindest eine Kühlkanal (10,11) zur Zu- und/oder Abführung eines Kühlfluids zu und von der kalten Seite in der Ausnehmung zur Aufnahme des kalten Teils endet, und daß beim Einsetzen des kalten Teils in die Ausnehmung des heißen Teils zumindest abschnittsweise zwischen kaltem Teil und heißem Teil ein Kühlraum (20) zur Aufnahme von Kühlfluid verbleibt, wobei der Kühlraum (20) im wesentlichen ringförmig ausgebildet ist.

2. Bodeneinsatz nach Anspruch 1, **dadurch gekennzeichnet, daß** die beiden Teile (15,16) des Bodeneinsatzes trennbar sind.

3. Bodeneinsatz nach einem der Ansprüche 1 bis 2, **dadurch gekennzeichnet, daß** das kalte Teil (15) und das heiße Teil (16) gegeneinander abgedichtet sind und zwar vorzugsweise mit Hilfe von O-Ringen (18)

4. Bodeneinsatz nach einem der Ansprüche 1 bis 3, **dadurch gekennzeichnet, daß** alle Flächen, die für den Kontakt mit dem herzustellenden Formling vorgesehen sind, an dem kalten Teil (15) angeordnet sind.

5. Bodeneinsatz nach einem der Ansprüche 1 bis 4, **dadurch gekennzeichnet, daß** an der Kontaktfläche zwischen heißem und kaltem Teil eine auf mindestens einem Teil aufgebrachte Isolationsbeschichtung, eine Isolationsmembran und/oder ein Abstandselement vorgesehen ist.

6. Bodeneinsatz nach einem der Ansprüche 1 bis 5, **dadurch gekennzeichnet, daß** die Ausnehmung im heißen Teil (16) derart ausgebildet ist, daß das kalte Teil (14) im eingesetzten Zustand im wesentlichen bündig mit dem Rand der Ausnehmung abschließt.

7. Bodeneinsatz nach einem der Ansprüche 1 bis 6, **dadurch gekennzeichnet, daß** sich das kalte Teil (15) bis in die Pforte (17) erstreckt und vorzugsweise die Pfortenöffnung durch eine Öffnung am Boden der Vertiefung In der kalten Seite gebildet wird.

8. Bodeneinsatz nach einem der Ansprüche 1 bis 7, **dadurch gekennzeichnet, daß** eine Einrichtung zur Wärmedämmung innerhalb des Bodeneinsatzes (6) zwischen der heißen Seite und der kalten Seite des Bodeneinsatzes vorgesehen ist.

9. Bodeneinsatz nach Anspruch 8, **dadurch gekennzeichnet, daß** die Einrichtung zur Wärmedämmung aus einem in den Grundkörper eingebrachten Einschnitt (19) besteht, wobei der Einschnitt derart ausgebildet ist, daß durch das Einbringen des Einschnitts die Wärmedurchtrittsfläche, d.h. die Fläche senkrecht zum Wärmefluß von der heißen zu der kalten Seite, im Bereich des Einschnittes reduziert wird und zwar vorzugsweise um mindestens 30% und besonders bevorzugt um mindestens 50% und ganz besonders bevorzugt um mindestens 75%.

10. Bodeneinsatz nach Anspruch 9, **dadurch gekennzeichnet, daß** der Einschnitt (19) in etwa In dem die Pforte (17) umgebenden Bereich eingebracht ist

11. Bodeneinsatz nach Anspruch 9 oder 10, **dadurch gekennzeichnet, daß** der Einschnitt (19) so angeordnet ist, daß er die Vertiefung der heißen Seite an einem Abschnitt in der Nähe der Pforte (17) umgibt.

12. Bodeneinsatz nach einem der Ansprüche 9 bis 11, **dadurch gekennzeichnet, daß** der Einschnitt (19) aus einer im wesentlichen umlaufenden Nut im Grundkörper besteht, wobei die Nut eine Tiefe hat, die vorzugsweise mindestens zweimal und besonders bevorzugt mindestens dreimal so groß ist wie die Breite der Nut.

13. Bodeneinsatz nach einem der Ansprüche 9 bis 12, **dadurch gekennzeichnet, daß** der Einschnitt (19) zumindest teilweise mit einem wärmedämmenden Material ausgefüllt ist.

14. Bodeneinsatz nach einem der Ansprüche 1 bis 13 **dadurch gekennzeichnet, daß** die den Kühlraum (20) begrenzende Fläche an dem kalten Teil (15) im wesentlichen parallel zur mit dem herzustellenden Formling in Kontakt tretenden Innenfläche der Vertiefung des kalten Teils (15) verläuft.

15. Bodeneinsatz nach Anspruch 14, **dadurch gekennzeichnet, daß** das kalte Teil (15) im Bereich des Kühlraums (20) Verstärkungselemente, vorzugsweise Verstärkungsrippen, aufweist.

**Claims**

1. A bottom insert (6) for a mold cavity for the production of moldings of plastic material comprising a main body with a hot side which has a recess for receiving molten plastic material under pressure and a cold side having a recess, the inside contour of which is intended to come into contact with the molding to be produced and to shape the outside contour thereof, and a gate which connects the recess of the hot side to the recess of the cold side and is intended to introduce molten plastic material from the hot side into the cold side, **characterized in that** the bottom insert is of a two-part configuration, more specifically with a hot part (16) which has the recess of the hot side and a cold part (15) which has the recess of the cold side, wherein the cold part (15) is arranged at least partially within the hot part (16) so that the hot part (16) at least portion-wise surrounds the cold part (15), wherein the hot part (16) has an opening in opposite relationship to the recess of the hot side for receiving the cold part (15), **characterized in that** at least one cooling passage (10, 11) is provided for the feed and/or discharge of a cooling fluid to and from the cold side, **characterized in that** the at least one cooling passage (10, 11) for the feed and/or discharge of a cooling fluid to and from the cold side ends in the opening for receiving the cold part and that when the cold part is fitted into the opening in the hot part, a cooling space (20) for receiving cooling fluid remains at least portion-wise between the cold part and the hot part, wherein the cooling space (20) is preferably in the form of part of a ring and is particularly preferably of a substantially ring-shaped configuration.

2. A bottom insert as set forth in claim 1 **characterized in that** the two parts (15, 16) of the bottom insert are separable.

3. A bottom insert as set forth in one of claims 1 through 2 **characterized in that** the cold part (15) and the hot part (16) are sealed off relative to each other, more specifically preferably by means of O-rings (18).

4. A bottom insert as set forth in one of claims 1 through 3 **characterized in that** all surfaces which are provided for contact with the molding to be produced are arranged at the cold part (15).

5. A bottom insert as set forth in one of claims 1 through 4 **characterized in that** there is provided at the contact surface between the hot part and the cold part, applied to at least one part, an insulating coating, an insulating membrane and/or a spacing element.

6. A bottom insert as set forth in one of claims 1 through 5 **characterized in that** the opening in the hot part (16) is of such a configuration that the cold part (15) in the inserted condition terminates substantially flush with the edge of the opening.

7. A bottom insert as set forth in one of claims 1 through 6 **characterized in that** the cold part (15) extends into the gate (17) and preferably the gate orifice is formed by an orifice at the bottom of the recess in the cold side.

8. A bottom insert as set forth in one of claims 1 through 7 **characterized in that** there is provided a device for thermal insulation within the bottom insert (6) between the hot side and the cold side of the bottom insert.

9. A bottom insert as set forth in claim 8 **characterized in that** the device for thermal insulation comprises a slot (19) provided in the main body, wherein the slot is of such a configuration that by virtue of the provision of the slot the heat transfer surface area, that is to say the area perpendicularly to the flow of heat from the hot side to the cold side, is reduced in the region of the slot, more specifically preferably by at least 30% and particularly preferably by at least 50% and quite particularly preferably by at least 75%.

10. A bottom insert as set forth in claim 9 **characterized in that** the slot (19) is provided approximately in the region surrounding the gate (17).

11. A bottom insert as set forth in claim 9 or claim 10 **characterized in that** the slot (19) is so arranged that it surrounds the recess of the hot side at a portion in the proximity of the gate (17).

12. A bottom insert as set forth in one of claims 9 through 11 **characterized in that** the slot (19) comprises a substantially peripherally extending groove in the main body, wherein the groove is of a depth which is preferably at least twice and particularly preferably at least three times as large the width of the groove.

13. A bottom insert as set forth in one of claims 9 through 12 **characterized in that** the slot (19) is at least partially filled with a heat-insulating material.

14. A bottom insert as set forth in one of claims 1 through 13 **characterized in that** the surface defining the cooling space (20) at the cold part (15) extends substantially parallel to the inside surface of the recess of the cold part (15), which surface comes into contact with the molding to be produced.

15. A bottom insert as set forth in claim 14 **characterized in that** the cold part (15) has reinforcing elements, preferably reinforcing ribs, in the region of the cooling space (20).

**Revendications**

1. Installation au sol (6) pour une cavité en vue de la fabrication de modelages en matière synthétique, constituée d'un corps de base doté d'un côté chaud, lequel comprend un évidement pour la réception de matière synthétique fondue et sous pression, et d'un côté froid doté d'un évidement, dont le contour intérieur est prévu pour entrer en contact avec le modelage à fabriquer et pour former le contour extérieur de celui-ci, tout comme d'une porte, laquelle relie l'évidement du côté chaud à l'évidement du côté froid et est prévue pour transférer la matière synthétique fondue du côté chaud vers le côté froid, l'installation au sol étant conçue en deux parties, à savoir avec une partie chaude (16) qui comprend l'évidement du coté chaud, et une partie froide (15) qui comprend l'évidement du coté froid, la partie froide (15) étant disposée au moins en partie à l'intérieur de la partie chaude (16) de sorte que la partie chaude (16) entoure au moins en partie la partie froide (15), la partie chaude (16) comprenant un évidement opposé à l'évidement du côté chaud pour la réception de la partie froide (15), **caractérisée en ce qu'**au moins un canal (10,11) de refroidissement est prévu pour l'amenée et/ou l'évacuation d'un fluide de refroidissement vers et depuis le côté froid, **caractérisée en ce que** l'au moins un canal (10,11) de refroidissement pour l'amenée et/ou l'évacuation d'un fluide de refroidissement vers et depuis le côté froid finit dans l'évidement destiné à la réception de la partie froide, et **en ce qu'**un compartiment (20) de refroidissement pour la réception du fluide de refroidissement reste au moins en partie entre la partie froide et la partie chaude lorsque la partie froide est insérée dans l'évidement de la partie chaude, le compartiment (20) de refroidissement étant de forme sensiblement annulaire.

2.  Installation au sol selon la revendication 1, **caractérisée en ce que** les deux parties (15,16) de l'installation au sol sont séparables.

3.  Installation au sol selon l'une des revendications 1 à 2, **caractérisée en ce que** la partie froide (15) et la partie chaude (16) sont étanchéifiées l'une par rapport à l'autre et de préférence à l'aide de joints toriques.

4.  Installation au sol selon l'une des revendications 1 à 3, **caractérisée en ce que** toutes les faces prévues pour le contact avec le modelage à fabriquer sont disposées sur la partie chaude (15).

5.  Installation au sol selon l'une des revendications 1 à 4, **caractérisée en ce qu'**un revêtement isolant appliqué sur au moins une partie, une membrane isolante et/ou un élément d'écartement sont prévus au niveau de la surface de contact entre la partie chaude et la partie froide.

6.  Installation au sol selon l'une des revendications 1 à 5, **caractérisée en ce que** l'évidement est formé dans la partie chaude (16) de telle sorte que la partie froide (15), lorsqu'elle est en place, affleure sensiblement le bord de l'évidement.

7.  Installation au sol selon l'une des revendications 1 à 6, **caractérisée en ce que** la partie froide (15) s'étend jusqu'à la porte (17) et **en ce que** l'ouverture de la porte est formée de préférence par une ouverture dans la base de l'évidement du côté froid.

8.  Installation au sol selon l'une des revendications 1 à 7, **caractérisée en ce qu'**un dispositif d'isolation thermique est prévu à l'intérieur de l'installation au sol (6) entre le côté chaud et le côté froid de l'installation au sol.

9.  Installation au sol selon la revendication 8, **caractérisée en ce que** le dispositif d'isolation thermique est composé d'une incision (19) insérée dans le corps de base, l'incision étant formée de telle sorte que la surface de passage de la chaleur, c'est-à-dire la surface perpendiculaire au flux thermique circulant du côté chaud vers le côté froid est réduite dans la zone de l'incision du fait de l'insertion de cette dernière, et de préférence, d'au moins 30 % et, de préférence encore d'au moins 50 % et idéalement d'au moins 75 %.

10.  Installation au sol selon la revendication 9, **caractérisée en ce que** l'incision (19) est pratiquée à peu près dans la zone entourant la porte (17).

11.  Installation au sol selon les revendications 9 ou 10, **caractérisée en ce que** l'incision (19) est disposée de telle sorte qu'elle entoure l'évidement du côté chaud sur une section à proximité de la porte (17).

12.  Installation au sol selon l'une des revendications 9 à 11, **caractérisée en ce que** l'incision (19) est constituée d'une rainure courant sensiblement autour du corps de base, la rainure possédant une profondeur, qui est de préférence au moins deux fois et dans l'idéal au moins trois fois plus élevée que la largeur de la rainure.

13.  Installation au sol selon l'une des revendications 9 à 12, **caractérisée en ce que** l'incision (19) est remplie au moins en partie d'un matériau thermosiolant.

14.  Installation au sol selon l'une des revendications 1 à 13, **caractérisée en ce que** la surface délimitant le compartiment (20) de refroidissement au niveau de la partie froide (15) est sensiblement parallèle à la face intérieure de l'évidement de la partie froide (15), face qui entre en contact avec le modelage à fabriquer.

15.  Installation au sol selon la revendication 14, **caractérisée en ce que** la partie froide (15) présente des éléments de renfort, et de préférence des nervures de renforcement, dans la zone du compartiment (20) de refroidissement.

Fig. 1

Fig. 3

Fig. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10024625
- DE 10037739

- US 4622001 A